# EUROPÄISCHE PATENTSCHRIFT

(11) **EP 3 158 218 B1**
(45) Veröffentlichungstag und Bekanntmachung des Hinweises auf die Patenterteilung: **20.01.2021**
(21) Anmeldenummer: 15713789.4
(22) Anmeldetag: 08.04.2015
(51) Int. Cl.: F16F 13/26

(54) **HYDROLAGER SOWIE KRAFTFAHRZEUG MIT EINEM DERARTIGEN HYDROLAGER**
HYDRAULIC BEARING AND MOTOR VEHICLE COMPRISING A HYDRAULIC BEARING OF THIS TYPE
PALIER HYDRAULIQUE ET VÉHICULE À MOTEUR ÉQUIPÉ D'UN TEL PALIER HYDRAULIQUE

(30) Priorität: 23.06.2014 DE 102014211953
(43) Veröffentlichungstag der Anmeldung: 26.04.2017
(73) Patentinhaber: ContiTech Vibration Control GmbH, 30165 Hannover (DE)
(72) Erfinder: GENDERJAHN, Robert, 30625 Hannover (DE); UHRMEISTER, Bernhard, 30419 Hannover (DE); MARIENFELD, Peter, 31608 Marklohe (DE)
(74) Vertreter: Finger, Karsten
(86) Internationale Anmeldenummer: PCT/EP2015/057548
(87) Internationale Veröffentlichungsnummer: WO 2015/197214

(56) Entgegenhaltungen:
- EP-A1- 0 529 133
- WO-A1-03/081079
- US-A- 4 877 225
- US-A1- 2005 017 420
- US-A1- 2008 174 058
- US-A1- 2011 042 873

## Beschreibung

Die Erfindung betrifft ein Hydrolager mit einer Tragfeder, einer von der Tragfeder zumindest teilweise umfassten Arbeitskammer, die mit einer Hydraulikflüssigkeit gefüllt ist, einer ersten Ausgleichskammer, und einem zwischen der Arbeitskammer und der ersten Ausgleichskammer ausgebildeten, ersten Drosselkanal zum Austausch von Hydraulikflüs sigkeit.

Außerdem betrifft die Erfindung ein Kraftfahrzeug, das einen Fahrzeugrahmen, einen Motor und ein als Hydrolager ausgebildetes Motorlager umfasst, das eine lagernde Verbindung zwischen dem Motor und dem Fahrzeugrahmen herstellt.

Hydrolager, die auch als Hydrauliklager bezeichnet werden, sind aus dem Stand der Technik bekannt. Sie dienen zur elastischen Abstützung von Aggregaten, insbesondere von Kraftfahrzeugmotoren. Mit Hilfe derartiger, sich z. B. zwischen einem Motor und einem Chassis des Kraftfahrzeugs befindenden Hydrolagern soll einerseits verhindert werden, dass sich Motorvibrationen auf das Chassis übertragen und andererseits sollen die mit dem Fahrbetrieb gegebenen Erschütterungen des Chassis nicht oder nur gedämpft vom Chassis an den Motor gelangen können.

Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen muss, um entstehende Schwingungen über einen breiten Frequenzbereich möglichst zu isolieren.

In ihrer Grundversion weisen derartige Hydrauliklager üblicherweise ein Gummielement als Tragfeder, die auch als Tragkörper bezeichnet wird, in Verbindung mit einem hydraulischen Dämpfer auf. Das Gummielement ist oft als Hohl-Konus ausgebildet. Die Tragfeder kann somit eine Mantelwandung der Arbeitskammer bilden. An der oberen, spitzen Stirnseite des Hohl-Konuses ist zumeist eine obere Abdeckung vorgesehen, an der ein Anschlusselement zur Befestigung des Motors angebracht ist. Das Anschlusselement ist für gewöhnlich ein Gewindebolzen, der mit dem Motor verschraubt werden kann. Dabei umfasst der hydraulische Dämpfer zumeist mindestens zwei Kammern, nämlich die genannte Arbeitskammer und eine Ausgleichskammer. In Längsrichtung des Hydrolagers ist die Ausgleichskammer für gewöhnlich unterhalb der Arbeitskammer angeordnet. Um die Arbeiterkammer und die Ausgleichskammer voneinander zu trennen, kann zwischen der Ausgleichskammer und der Arbeitskammer eine Trennwand angeordnet sein. Außerdem ist ein zwischen der Arbeitskammer und der Ausgleichkammer ausgebildeter Drosselkanal zum Austausch von Hydraulikflüssigkeit vorgesehen. Vorzugsweise ist der Drosselkanal zumindest abschnittsweise von der Trennwand ausgebildet. Alternativ kann der Drosselkanal auch von der Trennwand getrennt ausgebildet sein. Die Hydraulikflüssigkeit in der Arbeitskammer, der Ausgleichskammer und dem Drosselkanal bildet vorzugsweise das gesamte Hydraulikvolumen des Hydrolagers, sofern in Sonderausführungen nicht weitere Zusatzvolumina vorgesehen sind. Als Hydraulikflüssigkeit wird vorzugsweise ein Gemisch aus Öl und Wasser oder ein Fluid mit Glykol eingesetzt.

Bei einer Belastung des Hydrolagers wirkt eine Kraft in Längsrichtung des Hydrolagers auf die Tragfeder, so dass sich dieser elastisch verformt. Diese Verformung wird auch als Einfedern der Tragfeder bezeichnet. Die Arbeitskammer ist von der Tragfeder zumindest teilweise umfasst, so dass die Arbeitskammer durch das Einfedern der Tragfeder verkleinert wird. Damit steigt der Druck in der Arbeitskammer an, woraufhin ein Teil der Hydraulikflüssigkeit der Arbeitskammer durch den Drosselkanal in die Ausgleichskammer strömt. Für die strömende Hydraulikflüssigkeit stellt der Drosselkanal einen Strömungswiderstand dar. Das Durchströmen des entsprechend ausgebildeten Drosselkanals erzeugt deshalb Dissipation und somit Dämpfungsarbeit.

Die Ausgleichskammer ist bevorzugt mit mindestens einem membranartig verformbaren Wandungsteil, insbesondere eine Rollmembran, versehen, so dass der in die Ausgleichskammer einströmende Teil der Hydraulikflüssigkeit aufgenommen werden kann.

Ein derartiges Hydrolager ist beispielsweise aus dem Dokument DE 10 2010 060 886 A1 oder aus dem Dokument DE 10 2012 008 497 A1 bekannt.

Die Dämpfungseigenschaften solcher Hydrolager sind aufgrund ihrer Bauweise frequenzabhängig. Statische oder quasistatische Belastungen unterhalb einer Frequenz von 5 Hz werden dabei üblicherweise von der Tragfeder aufgenommen, die eine relativ große Steifheit aufweist.

Niederfrequente Schwingungen, d.h. Schwingungen mit Frequenzen von ca. 5 bis 20 Hz, die im Allgemeinen mit großen Amplituden auftreten, werden durch das Zusammenwirken der beiden Hydraulikkammern über den Drosselkanal gedämpft. Die Dämpfung entsteht dabei mit dem Strömen von zumindest eines Teils der Hydraulikflüssigkeit der Arbeitskammer durch den Drosselkanal in die Ausgleichskammer, und umgekehrt, wobei eine entsprechende Dämpfungsarbeit geleistet wird.

Hochfrequente Schwingungen, also Schwingungen im Frequenzbereich von 20 Hz bis beispielsweise 50 Hz, 100 Hz oder 200 Hz, werden aufgrund der Trägheit, Viskosität und Inkompressibilität der Hydraulikflüssigkeit und/oder der hohen Steifigkeit und Trägheit der Tragfeder nur sehr gering gedämpft oder sogar nahezu ungedämpft übertragen. Diese Schwingungen treten zwar im Allgemeinen nur mit kleinen Amplituden auf, sind aber aufgrund ihrer akustischen Wirkung von höherer Bedeutung.

Zur besseren Isolation solcher Schwingungen kann die Trennwand zwischen Arbeitskammer und Ausgleichskammer teilweise flexibel oder mit einem Freiweg ausgebildet werden. Eine solche Lösung wird jedoch vielen Isolierungsanforderungen, insbesondere hinsichtlich der stetig steigenden Komfortanforderungen bei Kraftfahrzeugen, nicht gerecht. Denn eine erhöhte Nachgiebigkeit der Trennwand verringert die dynamische Steifigkeit des Hydrolagers auch bei niedrigen Frequenzen. Dies kann eine verringerte Dämpfung zur Folge haben. Es wird auch von einem so genannten Dämpfungsverlust gesprochen.

Die US 2011/042873 A1 beschreibt eine flüssigkeitsgefüllte Schwingungsdämpfungsvorrichtung mit einer ersten und einer zweiten Flüssigkeitskammer, die jeweils mit einer nicht kompressiblen Flüssigkeit gefüllt sind und die während der Schwingungseinleitung relative Druckschwankungen erfahren, und die mit einem Öffnungsdurchgang versehen ist, durch den die erste Flüssigkeitskammer und die zweite Flüssigkeitskammer miteinander in Verbindung stehen, während sie in der Lage ist, eine bessere Zuverlässigkeit und Haltbarkeit im Hinblick auf eine wirksame Schwingungsdämpfungswirkung mehrerer Arten von Schwingungen mit unterschiedlichen Frequenzen aufzuweisen. In der Vorrichtung wird die Abstimmfrequenz des Blendendurchgangs variiert, indem eine Durchgangslänge des Blendendurchgangs durch die Einstellung eines Einführungsabstands eines inneren Blendenelements in ein äußeres Blendenelement variiert wird.

Der Erfindung liegt deshalb die Aufgabe zu Grunde, ein Hydrolager bereitzustellen, bei dem die genannten Nachteile verhindert oder verringert werden. Vorzugsweise sollte das Hydrolager dazu ausgebildet sein, für quasistatische Belastungen und im niederfrequenten Schwingungsbereich eine möglichst gute Dämpfung sowie im höherfrequenten Schwingungsbereich eine möglichst gute Isolation zu bieten.

Gemäß einem ersten Aspekt wird die Aufgabe gelöst durch das erfindungsgemäße Hydrolager mit einer Tragfeder, einer von der Tragfeder zumindest teilweise umfassten Arbeitskammer, die mit einer Hydraulikflüssigkeit gefüllt ist, einer ersten Ausgleichskammer, und einem zwischen der Arbeitskammer und der ersten Ausgleichskammer ausgebildeten, ersten Drosselkanal zum Austausch von Hydraulikflüssigkeit, wobei das Hydrolager ein steuerbares Ventil zum Absperren oder Drosseln eines Durchflusses von Hydraulikflüssigkeit durch den ersten Drosselkanal aufweist.

Der Erfindung liegt dabei der Gedanke zu Grunde, die dynamische Steifigkeit des Hydrolagers für den hochfrequenten Schwingungsbereich zu verringern, um ein möglichst gutes Isolationsverhalten zu erreichen. Eine Möglichkeit zur Verringerung der genannten dynamischen Steifigkeit besteht darin, die Steifigkeit der die Ausgleichskammer begrenzende Wanderung zu verringern. Mit anderen Worten wäre die Ausgleichskammer mit einer höheren Nachgiebigkeit auszugestalten. Ein derartiges Hydrolager hätte deshalb eine bessere Isolationswirkung für hochfrequente Schwingungen. Um jedoch einen damit einhergehenden Verlust der Dämpfung bei quasistatischen Belastungen zu verhindern, weist das erfindungsgemäße Hydrolager ein steuerbares Ventil zum Absperren oder Drosseln eines Durchflusses von Hydraulikflüssigkeit durch den ersten Drosselkanal auf.

Somit kann das Ventil bei einer quasistatischen Belastung abgesperrt werden. Die Steifigkeit des Hydrolagers entspricht sodann zumindest im Wesentlichen der Steifigkeit der Tragfeder. Damit weist das Hydrolager bei quasistatischen Belastungen die gewünschte Steifigkeit auf. Überschreiten die auf das Hydrolager einwirkenden Schwingungen eine bestimmte Frequenz, kann das Ventil wieder geöffnet werden, so dass eine entsprechende Isolationswirkung entsteht. In einem besonders einfachen Fall kann das Ventil von einem geöffneten Zustand zu einem geschlossenen Zustand, oder umgekehrt, gesteuert umgeschaltet werden. Bevorzugt wird unter einem Ventil deshalb ein steuerbares Mittel verstanden, um einen Kanal zu verschließen oder zu öffnen. Ein Ventil kann somit auch als ein Schieber oder dergleichen ausgestaltet sein. Alternativ kann es vorgesehen sein, dass das Ventil ausgebildet ist, einen Durchfluss von Hydraulikflüssigkeit zu drosseln. Das Ventil kann also als Drossel beziehungsweise als Drosselventil ausgestaltet sein. Somit kann das Ventil auch einen beliebigen Öffnungs-Zustand zwischen einem vollständig geöffneten Zustand und dem geschlossenen Zustand annehmen. In Abhängigkeit der auf das Hydrolager einwirkenden Schwingungen kann deshalb mit dem steuerbaren Ventil der Durchfluss durch den ersten Drosselkanal derart eingestellt werden, dass eine möglichst gute Dämpfung beziehungsweise Isolation der Schwingungen erfolgt. Um das Ventil entsprechend einzustellen, ist das Ventil steuerbar. Hierzu kann für das Hydrolager ein Aktor vorgesehen sein, der das Ventil ansteuert.

Die erfindungsgemäße Ausgestaltung des Hydrolagers bietet deshalb die Möglichkeit, die Ausgleichskammer möglichst nachgiebig zu gestalten, ohne dass dies einen negativen Einfluss auf die Dämpfung und die dynamische Steifigkeit des Hydrolagers bei einer quasistatischen Belastung oder bei dem Einwirken von niederfrequenten Schwingungen auf das Hydrolager hat.

Die erfindungsgemäße Ausgestaltung des Hydrolagers zeichnet sich durch eine zweite Ausgleichskammer und einen zwischen der Arbeitskammer und der zweiten Ausgleichskammer ausgebildeten, zweiten Drosselkanal zum Austausch von Hydraulikflüssigkeit aus. Somit sind für das Hydrolager mindestens zwei Ausgleichskammern und zwei Drosselkanäle vorgesehen. Bei statischen oder quasistatischen Belastungen kann das steuerbare Ventil den ersten Drosselkanal verschließen. Die genannten, statischen oder quasistatischen Belastungen werden deshalb zumindest im Wesentlichen von der Tragfeder aufgenommen. Das Ventil kann auch bei niederfrequenten Schwingungen geschlossen bleiben. Denn die niederfrequenten Schwingungen können durch ein Zusammenwirken der Arbeitskammer und der zweiten Ausgleichskammer über den zweiten Drosselkanal gedämpft werden. Wie eingangs erläutert, entsteht nämlich durch das Strömen der Hydraulikflüssigkeit durch den zweiten Drosselkanal Dämpfungsarbeit. Bei einem Auftreten von höherfrequenten Schwingungen kann das Ventil geöffnet werden, so dass die dynamische Steifigkeit des Hydrolagers verkleinert und das Isolationsverhalten des Hydrolagers verbessert wird.

Eine bevorzugte Ausgestaltung des Hydrolagers zeichnet sich durch eine Trennwand aus, die zwischen der Arbeitskammer und der zweiten Ausgleichskammer angeordnet ist, wobei der zweite Drosselkanal von der Trennwand gebildet ist. Der zweite Drosselkanal ist deshalb vorzugsweise ein passiver Drosselkanal. Denn der zweite Drosselkanal kann durch seine Bildung von der Trennwand frei von aktiven Elementen, wie beispielsweise dem steuerbaren Ventil, sein. Eine derartige Ausgestaltung des Hydrolagers ist besonders kompakt und einfach herzustellen.

Die erfindungsgemäße Ausgestaltung des Hydrolagers zeichnet sich dadurch aus, dass das Hydrolager eine Steuermembran, die zur Veränderung eines Arbeitskammervolumens der Arbeitskammer ausgebildet ist, und einen Aktor zum Auslenken der Steuermembran umfasst, wobei das Ventil durch den Aktor steuerbar ist. Ein derartiger Aktor kann auch als Aktuator bezeichnet werden. Als besonders zweckmäßig haben sich Aktoren herausgestellt, die jeweils einen Stator und einen Anker umfassen. Der Anker ist dabei beweglich gelagert zu dem Stator ausgebildet, so dass der Anker gegenüber dem Stator in Längsrichtung des Aktors ausgelenkt werden kann. Der Anker ist mechanisch mit einer Steuermembran verbunden, die vorzugsweise der Trennwand zugeordnet ist. Die Steuermembran kann dabei durch einen flexiblen Teil der Trennwand gebildet sein. Es ist aber auch möglich, dass die Steuermembran von der Trennwand eingefasst ist und somit als Bestandteil der Trennwand angesehen wird. Die Steuermembran kann in ihrer Normalenrichtung elastisch verformt werden. Indem der Anker mechanisch an die Steuermembran gekoppelt ist, kann mit dem Aktor die Steuermembran in ihrer Normalenrichtung gesteuert verformt werden. Dabei kann es vorgesehen sein, dass der Anker nicht unmittelbar mit der Steuermembran verbunden ist, sondern dass beispielsweise ein Gelenksmechanismus vorgesehen ist, der zwischen dem Anker und der Steuermembran angeordnet ist, um Bewegungen und/oder Kräfte vom Anker auf die Steuermembran zu übertragen. Mit dem Verformen der Steuermembran in ihrer Normalenrichtung verändert sich das Hydraulikvolumen der Arbeitskammer. Dies gilt insbesondere dann, wenn die Steuermembran einen Teil der Trennwand zu der Arbeitskammer bildet. Deshalb dient der Aktor auch zur Steuerung des Hydraulikvolumens der Arbeitskammer.

Wird das Hydrolager zur Lagerung eines Motors eines Kraftfahrzeuges eingesetzt, so können Sensoren des Kraftfahrzeugs eingesetzt werden, um die vom Motor ausgehenden Schwingungen in einem möglichst nur sehr gedämpften Maß an einen Innenraum zu übertragen oder die Schwingungen des Motors sogar vollständig vom Chassis zu entkoppeln. Hierzu kann beispielsweise ein Sensor vorgesehen sein, der Schwingungen des Motors oder des Chassis messen kann. Alternativ können auch mehrere Sensoren an unterschiedlichen Orten des Motors und/oder des Chassis vorgesehen sein.

Werden von dem Sensor zur Messung der Schwingungen des Chassis hochfrequente Schwingungen erfasst, kann die Steuermembran von dem Aktor synchron ausgelenkt werden. Die Richtung der Auslenkung kann dabei durch die Bauart der Trennwand bzw. der Steuermembran bestimmt sein. Die Schwingungen des Motors verursachen entsprechende hochfrequente Druckschwankungen in der Hydraulikflüssigkeit der Arbeitskammer. Mit der synchronen Auslenkung der Steuermembran werden diese hochfrequenten Druckschwankungen möglichst vollständig ausgeglichen. Bestenfalls kommt es somit zu einer Kompensation, so dass diese hochfrequenten Schwingungen nicht von dem Hydrolager übertragen werden. Entsprechend hochfrequente Schwingungen verursachen deshalb im Innenraum des Kraftfahrzeugs keine oder nur sehr geringe Vibrations- beziehungsweise Geräuschemissionen. Durch die erläuterte Ansteuerung des Aktors und des entsprechenden Einwirkens auf die Steuermembran soll also eine Absenkung der dynamischen Federrate im Bereich der hochfrequenten Schwingungen bewirkt werden. Mit anderen Worten soll das Hydrolager für hochfrequente Schwingungen "weich" geschaltet werden.

Werden von dem Sensor zur Messung der Schwingungen des Chassis niederfrequente Schwingungen mit großen Amplituden erfasst, wurde in der Praxis festgestellt, dass die Steuermembran nur einen geringen Einfluss auf die Dämpfung derartiger Schwingungen nehmen kann. Deshalb ist es gemäß der vorteilhaften Ausgestaltung der Erfindung vorgesehen, den Aktoren für eine weitere Funktion zu verwenden, nämlich zur Steuerung des Ventils. Der Aktor dient deshalb sowohl zur Ansteuerung des Ventils als auch zur Auslenkung der Steuermembran. Für die Auslenkung der Steuermembran sind erfahrungsgemäß nur geringe Wege nötig, so dass bei hochfrequenten Schwingungen der Aktor derart verfahren ist, dass das Ventil in einem geöffneten Zustand bleibt und zugleich die Steuermembran zur Auslenkung gebracht wird. Bei einer quasistatischen Belastung des Hydrolagers oder bei dem Auftreten von niederfrequenten Schwingungen ist es nicht notwendig, die Steuermembran entsprechend den auftretenden Schwingungen anzusteuern. Somit kann der Aktor das Ventil derart ansteuern, dass das Ventil geschlossen oder in einem bestimmten Drosselzustand ist.

Eine bevorzugte Ausgestaltung des Hydrolagers zeichnet sich dadurch aus, dass das Hydrolager einen Steuerkanal aufweist, der von der Arbeitskammer zu der Steuermembran führt. Mit dem Steuerkanal wird die Integration der Steuermembran in das Hydrolager erleichtert. Denn die Steuermembran kann nunmehr an einen Platz innerhalb des Hydrolagers angeordnet werden, der für den Gesamtaufbau des Hydrolagers günstig ist. So kann die Steuermembran beispielsweise seitlich zu der Ausgleichskammer oder unterhalb der Ausgleichskammer angeordnet sein. Andere Alternativen sind grundsätzlich auch denkbar.

Eine bevorzugte Ausgestaltung des Hydrolagers zeichnet sich dadurch aus, dass der Steuerkanal einen Abschnitt des ersten Drosselkanals bildet. Indem der Steuerkanal ein Abschnitt des ersten Drosselkanal bildet, kann das Hydrolager kompakter ausgebildet sein. Außerdem kann Gewicht eingespart werden, da für den gemeinsamen Abschnitt kein zusätzliches Material zur Bildung einer entsprechenden Kanalwanderung aufgewendet werden muss.

Eine bevorzugte Ausgestaltung des Hydrolagers zeichnet sich dadurch aus, dass das Ventil durch die Steuermembran und die Trennwand gebildet ist. So kann beispielsweise die Trennwand einen Ventilsitz und die Steuermembran einen Ventilteller ausbilden, der gegen den Ventilsitz verfahrbar ist, um das Ventil zu verschließen. In diesem Fall würde die Trennwand ebenfalls einen Abschnitt des ersten Drosselkanals bilden. Dies hätte den Vorteil, dass kein zusätzliches Material aufzuwenden wäre, um den entsprechenden Abschnitt zu bilden. Das Hydrolager wäre deshalb besonders kompakt und leicht. Durch die Doppelfunktion der Steuermembran könnte ebenfalls Gewicht und Bauraum eingespart werden. Da die Steuermembran mittels des Aktors auslenkbar ist, könnte der gleiche Aktor verwendet werden, um das Ventil wie zuvor beschrieben zu verschließen oder zu öffnen. Die Auslenkung der Steuermembran könnte dann erfolgen, wenn das Ventil im offenen Zustand ist. Die Steuermembran, die Trennwand und der Aktor hätten deshalb jeweils mindestens eine Doppelfunktion mit einem entsprechenden Synergieeffekt.

Eine bevorzugte Ausgestaltung des Hydrolagers zeichnet sich dadurch aus, dass die Trennwand eine Dichtfläche des Ventils und die Steuermembran einen Gegendichtfläche des Ventils bilden, wobei ein Raum zwischen der Dichtfläche und der Gegendichtfläche einen Abschnitt des ersten Drosselkanals bildet. Indem der Aktor dazu eingerichtet ist, die Steuermembran auszulenken und/oder zu verfahren, kann die Gegendichtfläche gegen die von der Trennwand gebildete Dichtfläche gepresst werden, so dass sich eine entsprechende Dichtung ausbildet. Das Ventil würde in diesem Falle den ersten Drosselkanal verschließen. Wird die Gegendichtfläche mittels des Aktors von der Dichtfläche getrennt, öffnet sich das Ventil wieder. Der Raum zwischen der Dichtfläche und der Gegendichtfläche erlaubt somit wieder ein Durchströmen von Hydraulikflüssigkeit, so dass der entsprechende Raum einen Abschnitt des Drosselkanals bildet. Auch hier zeigt sich, dass die Steuermembran und die Trennwand jeweils mehrere Funktionen bieten können, so dass ein kompakter und leichter Aufbau des Hydrolagers möglich ist.

Eine bevorzugte Ausgestaltung des Hydrolagers zeichnet sich dadurch aus, dass die Trennwand an einer der Steuermembran zugewandten Seite eine Dichtkontur aufweist, die die Dichtfläche bildet, und die Steuermembran an einer der Trennwand zugewandten Seite eine weitere Dichtkontur aufweist, die die Gegendichtfläche bildet. Mit den beiden Dichtkonturen ist es möglich, besonders einfach ein Drosselventil herzustellen. Denn die Konturen können beispielsweise im Querschnitt jeweils konvex und/oder konkav ausgebildet sein, so dass die beiden Konturen beispielsweise ineinander fassen. Damit kann der entsprechende Strömungswiderstand des Ventils besonders einfach gesteuert einstellbar sein.

Eine bevorzugte Ausgestaltung des Hydrolagers zeichnet sich dadurch aus, dass der Aktor einen Stator und einem in Längsrichtung des Stators beweglichen Anker umfasst, dem Anker ein Ankerstößel zugeordnet ist, der Anker mittels des Ankerstößels mit der Steuermembran mechanisch verbunden ist, das Hydrolager eine erste Rollmembran umfasst, die erste Rollmembran an dem Ankerstößel und an der Trennwand befestigt ist, und die erste Ausgleichskammer zwischen der Trennwand, dem Ankerstößel und der ersten Rollmembran ausgebildet ist.

Bezüglich einer grundlegenden Wirkungsweise eines Aktors wird auf die vorherigen Erläuterungen und auf die Druckschrift DE 198 39 464 C2 verwiesen. Bei dem Aktor handelt es sich insbesondere um einen elektromagnetischen Linearaktor und vorzugsweise um einen Reluktanz-Linearaktor. Grundsätzlich können jedoch auch andere Aktoren, insbesondere andere elektrische Aktoren, eingesetzt werden.

Der dem Anker zugeordnete Ankerstößel kann fest oder gelenkig mit dem übrigen Anker verbunden sein. So kann der Ankerstößel beispielsweise nach Art einer Pleuelstange ausgebildet sein. Dies bietet die Möglichkeit, dass sich die erste Ausgleichskammer radial außenseitig zu dem Ankerstößel ausbildet. Dafür ist es vorgesehen, dass das Hydrolager eine erste Rollmembran umfasst. Die erste Rollmembran ist vorzugsweise aus elastischem Material. Die erste Rollmembran kann außerdem ringförmig ausgebildet sein. Gemäß der zuletzt genannten Ausgestaltung ist die erste Rollmembran an dem Ankerstößel und an der Trennwand befestigt. Dazu können eine radial innenseitige Kante der ringförmigen, ersten Rollmembran an dem Ankerstößel und eine radial außenseitige Kante der ringförmigen, ersten Rollmembran an der Trennwand kraftschlüssig, formschlüssig und/oder stoffschlüssig befestigt sein. Die erste Ausgleichskammer bildet sich sodann zwischen der Trennwand, dem Ankerstößel und der ersten Rollmembran. Indem die Trennwand und der Ankerstößel einen Teil der Wanderung der ersten Ausgleichskammer bilden, ist das Hydrolager besonders kompakt ausgebildet.

Eine bevorzugte Ausgestaltung des Hydrolagers zeichnet sich dadurch aus, dass die Trennwand eine Bohrung aufweist, durch die der Ankerstößel führt, wobei ein Raum zwischen dem Ankerstößel und einer radial innenseitigen Wandung der Bohrung einen Abschnitt des ersten Drosselkanals bildet. Indem der Ankerstößel durch die Bohrung der Trennwand führt, können die Steuermembran und der Stator des Aktors auf unterschiedlichen Seiten der Trennwand angeordnet sein. Somit kann der Bauraum des Hydrolagers optimal genutzt werden. Die Steuermembran kann dazu auf der der Arbeitskammer zugewandten Seite der Trennwand angeordnet sein, so dass die Steuermembran das Arbeitskammervolumen der Arbeitskammer unmittelbar oder mittels des Steuerkanals verändern kann. Die erste Ausgleichskammer ist vorzugsweise auf der von der Arbeitskammer abgewandten Seite der Trennwand angeordnet. Somit führt der erste Drosselkanal durch die Trennwand, wobei von dem Raum zwischen dem Ankerstößel und einer radial innenseitigen Wanderung der Bohrung durch die Trennwand ein Abschnitt des ersten Drosselkanals gebildet ist. Die Arbeitskammer und die erste Ausgleichskammer können deshalb besonders dicht zueinander angeordnet sein. Außerdem wurde zuvor erläutert, dass das Ventil von der Steuermembran und der Trennwand gebildet werden können. So kann die Steuermembran mit ihrer, der Trennwand zugewandten Seite mittels des Aktors derart verfahren werden, dass die Bohrung verschlossen wird. In diesem Fall wäre auch das Ventil verschlossen. Die Ausbildung der Trennwand mit einer Bohrung und einen durch die Bohrung führenden Ankerstößel, der dem Anker des Aktors zugeordnet ist, ist deshalb besonders kompakt, da mehrere Funktionen des Hydrolagers von gleichen Bauteilen gewährleistet werden.

Eine bevorzugte Ausgestaltung des Hydrolagers zeichnet sich dadurch aus, dass das Hydrolager eine zweite, an der Trennwand befestigte Rollmembran umfasst, wobei die zweite Ausgleichskammer zwischen der Trennwand und der zweiten Rollmembran ausgebildet ist. Die zweite Rollmembran ist vorzugsweise aus elastischem Material hergestellt. Außerdem ist es bevorzugt, dass die zweite Rollmembran ringförmig ausgebildet ist. Die zweite Rollmembran kann deshalb mit ihrer radial innenseitigen Kante sowie mit ihrer radial außenseitigen Kante an der Trennwand formschlüssig, kraftschlüssig und/oder stoffschlüssig befestigt sein. Die beiden Kanten sind vorzugsweise voneinander beabstandet. Außerdem ist es vorzugsweise vorgesehen, dass die zweite Rollmembran an der von der Arbeitskammer abgewandten Seite der Trennwand angeordnet ist. Die zweite Rollmembran kann sich außerdem radial außenseitig zu der ersten Rollmembran erstrecken. Durch die getrennte Ausbildung der ersten Rollmembran und der zweiten Rollmembran können unterschiedliche Dämpfungscharakteristika des Hydrolagers konstruktiv bestimmt sein. So ist es beispielsweise möglich, dass ein Strömungswiderstand des ersten Drosselkanals größer als ein Strömungswiderstand des zweiten Drosselkanals, oder umgekehrt, ist. Entsprechend der Verhältnisse der Strömungswiderstände kann das Dämpfungsverhalten für bestimmte Schwingungsfrequenzen vorteilhaft eingestellt sein.

Eine bevorzugte Ausgestaltung des Hydrolagers zeichnet sich dadurch aus, dass die erste und die zweite Rollmembran getrennt oder als integrales Bauteil ausgestaltet sind. Sofern die beiden Rollmembran getrennt ausgebildet sind, können diese auch getrennt an der Trennwand bzw. an dem Ankerstößel befestigt werden. Dies erleichtert die Montage. Sofern die beiden Rollmembranen als integrales Bauteil ausgestaltet sind, können die beiden Rollmembranen eine gemeinsame Verbindung zu der Trennwand aufweisen, so dass auch diese alternative Ausgestaltung eine einfache Montage gewährleistet.

Eine bevorzugte Ausgestaltung des Hydrolagers zeichnet sich dadurch aus, dass eine Druckkammer vorgesehen ist, wobei die Steuermembran zwischen dem Steuerkanal und der Druckkammer angeordnet ist. Die Druckkammer kann mit Luft, Gas und/oder einem Gasgemisch gefüllt sein. Mit dem Auslenken der Steuermembran wird deshalb nicht nur das Volumen der Arbeitskammer sondern auch das Volumen der Druckkammer verändert. Ein derartiger Aufbau ist grundsätzlich aus dem Stand der Technik bekannt und wird auch als invertierter Aufbau bezeichnet. Denn die Druckkammer kann einen Druck aufweisen, der größer als der nominelle Druck in der Arbeitskammer ist. Bei einer Ansteuerung der Steuermembran wirken deshalb die auf das Hydrolager von außen ein wirkenden Kräfte und die Kraft des Ankers in entgegengesetzter Richtung, so dass eine Regelung im Resonanzbereich möglich ist. Die Druckkammer kann zu einer der Arbeitskammer zugewandten Seite der Trennwand angeordnet sein, so dass der Ankerstößel ebenfalls durch eine Bohrung der Trennwand führt und die zuvor genannten Vorteile verwirklicht werden können.

Gemäß einem weiteren Aspekt wird die eingangs genannte Aufgabe außerdem durch ein Kraftfahrzeug gelöst, das einen Fahrzeugrahmen, einen Motor und ein Motorlager umfasst, das eine lagernde Verbindung zwischen dem Motor und dem Fahrzeugrahmen herstellt, wobei das Motorlager durch ein erfindungsgemäßes Hydrolager ausgebildet ist. Dabei gelten Merkmale, Details und Vorteile, die im Zusammenhang mit dem erfindungsgemäßen Hydrolager beschrieben sind, selbstverständlich auch im Zusammenhang mit dem erfindungsgemäßen Kraftfahrzeug und jeweils umgekehrt, sodass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Querschnittsansicht des Hydrolagers,
- Fig. 2: eine schematische Ansicht des Hydrolagers entlang des Schnittes A-A, und
- Fig. 3: ein Ausschnitt einer schematischen, perspektivischen Schnittdarstellung der Steuermembran und der angrenzenden Trennwand.

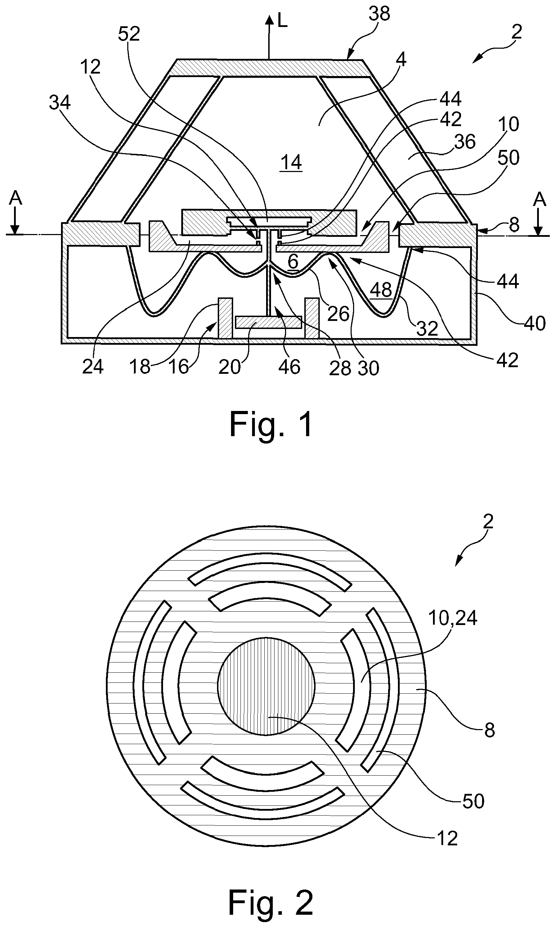

Aus der Figur 1 ist ein Hydrolager 2 zu erkennen. Das Hydrolager 2 umfasst eine als Gummielement ausgestaltete Tragfeder 36. Diese Tragfeder 36 ist für gewöhnlich als Hohlkörper ausgebildet, wobei die Oberseite der Tragfeder 36 eine Abdeckung 38 aufweist. An der Abdeckung 38 ist zumeist ein Anschlusselement (nicht dargestellt) zur Befestigung eines Motors angebracht. In einer einfachen Ausgestaltung handelt es sich bei dem Anschlusselement um einen Gewindebolzen, der mit dem Motor verschraubt werden kann. An der Unterseite der Tragfeder 36 schließt die Trennwand 8 an. Zwischen der Tragfeder 36, der Abdeckung 38 und der Trennwand 8 bildet sich die Arbeitskammer 4 aus. Die Arbeitskammer 4 ist mit einer Hydraulikflüssigkeit gefüllt. Hierbei handelt es sich vorzugsweise um ein Gemisch aus Öl und Wasser. In Längsrichtung L unterhalb der Trennwand 8 schließt das hohlzylindrische Basisgehäuse 40 an. In das Basisgehäuse 40 ist die erste Rollmembran 26 eingebracht, die aus elastischem Material hergestellt ist. Durch ihre Ringform ist die erste Rollmembran 26 mit ihrer radial innenseitige Kante 28 an dem Ankerstößel 46 des Linearaktors 16 und mit ihrer radial außenseitigen Kante 30 an der Unterseite der Trennwand 8 befestigt. In das Basisgehäuse 40 ist außerdem die zweite Rollmembran 32 eingebracht, die ebenfalls aus elastischem Material hergestellt ist. Die zweite Rollmembran hat auch eine Ringform. Mit ihrer radial innenseitigen Kante 42 und mit ihrer radial außenseitigen Kante 44 ist die zweite Rollmembran 32 an der Unterseite der Trennwand 8 befestigt. Die radial innenseitige Kante 42 der zweiten Rollmembran 32 und ihre radial außenseitigen Kante 44 weisen einen radialen Abstand voneinander auf.

Der von der Trennwand 8, der ersten Rollmembran 26 und dem Ankerstößel 46 eingeschlossene Raum bildet die erste Ausgleichskammer 6 des Hydrolagers 2. Der von der Trennwand 8 und der zweiten Rollmembran 32 eingeschlossene Raum bildet die zweite Ausgleichskammer 48. Jede der Ausgleichskammern 6, 48 ist bevorzugt mit Hydraulikflüssigkeit gefüllt, die vorzugsweise ein Gemisch aus Öl und Wasser ist. Aus der Figur 1 ist somit zu entnehmen, dass die Trennwand 8 zwischen der Arbeitskammer 4 und den Ausgleichskammern 6, 48 angeordnet ist.

Zur Dämpfung von Schwingungen, die von dem Motor über die Abdeckung 38 auf die Tragfeder 36 und somit auch auf ein Arbeitskammervolumen 14 der Arbeitskammer 4 wirken, ist ein zwischen der Arbeitskammer 4 und der ersten Ausgleichskammer 6 ausgebildeter erster Drosselkanal 10 und ein zwischen der Arbeitskammer 4 und der zweiten Ausgleichskammer 6 ausgebildeter zweiter Drosselkanal 50 vorgesehen, die jeweils zum Austausch von Hydraulikflüssigkeit dienen. Wie in Fig. 1 dargestellt, werden die Drosselkanäle 10, 50 zumindest teilweise von der Trennwand 8 gebildet oder sind in diese eingefasst.

Wird die Tragfeder 36 durch Schwingungen gestaucht, führt dies zumeist zu einer Erhöhung des Drucks der Hydraulikflüssigkeit in der Arbeitskammer 4 und/oder zu einer Verkleinerung des Arbeitskammervolumens 14 der Arbeitskammer 4. In beiden Fällen erfolgt ein Volumenstrom der Hydraulikflüssigkeit aus der Arbeitskammer 4 durch den zweiten Drosselkanal 50 in die zweite Ausgleichskammer 50. Der Drosselkanal 50 weist einen derart kleinen Durchmesser auf, dass Dissipation entsteht und die auf die Tragfeder 36 einwirkenden Schwingungen gedämpft werden. Die Dämpfung mittels des Drosselkanals 50 ist jedoch nur für niederfrequentierte Schwingungen effektiv. Bei höherfrequenten Schwingungen, so beispielsweise ab 20 Hz, werden Schwingungen durch den Drosselkanal 50 nur gering gedämpft oder verhindert.

Um die niederfrequenten Schwingungen noch besser zu dämpfen, kann der der erste Drosselkanal 10 eingesetzt werden, der die Arbeitskammer 4 mit der ersten Ausgleichskammer 6 verbindet. Dabei ist es bevorzugt vorgesehen, dass das Ventil 34 zur Dämpfung der genannten Schwingungen den ersten Drosselkanal 10 nicht absperrt. Vielmehr ist der erste Drosselkanal 10 durch das Ventil 34 geöffnet. Kommt es nun zu einer Erhöhung des Drucks der Hydraulikflüssigkeit in der Arbeitskammer 4, strömt Hydraulikflüssigkeit durch beide Drosselkanäle 10, 50 in die jeweils zugehörigen Ausgleichskammern 6, 48. In dem ersten Drosselkanal 10 entsteht sodann auch eine Dissipation. Indem beide Drosselkanäle 10, 50 parallel durchströmt werden können, kann das Hydrolager 2 niederfrequente Schwingungen besser dämpfen.

Mit dem geöffneten, ersten Drosselkanal 10 und der ersten Ausgleichskammer 6 verringert sich jedoch auch die Steifigkeit des Hydrolagers 2 für statische oder quasistatische Belastungen mit einer Frequenz von bis zu 5 Hz. Um die Steifigkeit des Hydrolagers 2 für derartige Belastungen zu erhöhen, ist es erfindungsgemäß vorgesehen, dass der erste Drosselkanal 10 mittels des Ventils 34 abgesperrt oder gedrosselt werden kann. Das Ventil 34 dient also zum Absperren oder Drosseln eines Durchflusses von Hydraulikflüssigkeit durch den ersten Drosselkanal 10. Erfährt das Hydrolager 2 nun eine quasistatische Belastung, kann die Hydraulikflüssigkeit bei geschlossenem Ventil 34 nicht in die erste Ausgleichskammer 6 strömen, so dass es zu einer entsprechenden Verformung bzw. Aufblähung der Tragfeder 36 kommt. Durch die Verformung bzw. Aufblähung der Tragfeder 36 tritt eine gewünschte Dämpfungswirkung ein.

Zur Isolierung von Schwingungen mit einer Frequenz von mehr als 20 Hz weist das Hydrolager 2 eine Steuermembran 12 auf, die in Fluidverbindung mit der Arbeitskammer 4 ausgebildet ist. Dazu ist ein Steuerkanal 24 vorgesehen sein, um eine hydraulische Verbindung von der Arbeitskammer 4 zu der Steuermembran 12 herzustellen. Die Steuermembran 12 ist, wie aus Figur 1 ersichtlich, zwischen dem Steuerkanal 24 und einer Druckkammer 52 angeordnet. Es handelt sich bei dem Hydrolager 2 also um ein Lager mit invertiertem Wirkprinzip. Der Steuerkanal 24 bildet außerdem einen Abschnitt des ersten Drosselkanals 10. Der Steuerkanal 24 beziehungsweise der genannte Abschnitt des ersten Drosselkanals 10 führen deshalb von der Arbeitskammer 4 zu der Steuermembran 12. Das eine Ende des Steuerkanals 24 beziehungsweise des ersten Drosselkanals 24 ist zu der Arbeitskammer 4 hin geöffnet. An das andere Ende des Steuerkanals 24 schließen die Steuermembran 12 und der übrige Abschnitt des Drosselkanals 24 an. Im Übergang von dem vom Steuerkanal 24 gebildeten Abschnitt des Drosselkanals 10 zu dem übrigen Drosselkanal 10 ist das Ventil 34 angeordnet. Das Ventil 34 ist dabei durch einen von der Trennwand 8 gebildeten Ventilsitz 42 und einem von der Steuermembran 12 gebildeten Ventilteller 44 ausgestaltet. Die Steuermembran 12 und die Trennwand 8 bilden deshalb eine Dichtfläche und eine korrespondierende Gegendichtfläche zum Öffnen, Schließen oder Drosseln des Durchflusses von Hydraulikflüssigkeit durch das Ventil 34. Die Steuermembran 12 und somit auch der Ventilteller 44 sind mittels des Ankerstößels 46 an den Anker 20 des Linearaktors 16 gekoppelt. Bei dem Linearaktor 16 handelt es sich vorzugsweise um einen elektromagnetischen Linearaktor. Andere Linearaktoren sind aber auch möglich. Wird im Fall eines elektromagnetischen Linearaktors der Stator 18 bestromt, führt dies zu einer Relativbewegung des Ankers 20, so dass die Steuermembran 12 in Längsrichtung L des Hydrolagers 2 ausgelenkt wird. Dabei kann der Linearaktor 16 die Steuermembran 12 und somit auch den Ventilteller 44 gegen den Ventilsitz 42 verfahren, so dass das Ventil 34 geschlossen wird. Der Drosselkanal 10 ist in diesem Fall gesperrt. Zum Öffnen des Ventils 34 wird die Steuermembran 12 mittels des Linearaktors 16 in die entgegengesetzte Richtung verfahren. Da die Steuermembran 12 zwischen dem Steuerkanal 24 und der Druckkammer 52 angeordnet ist, kann das Ventil 34 einen geöffneten Zustand, einen geschlossenen Zustand oder jeden beliebigen Zustand dazwischen annehmen, sofern der Linearaktor 16 die Steuermembran 12 entsprechend auslenkt. Bei dem elektromagnetischen Linearaktor 16 erfolgt dies durch ein entsprechendes Bestromen des Stators 18.

Im Weiteren wird angenommen, dass die Steuermembran 12 derart verfahren ist, dass das Ventil 34 geöffnet ist, so dass die Steuermembran 12 Hubbewegungen in Längsrichtung L des Hydrolagers 2 ausführen kann. Somit kommuniziert die Steuermembran 12 mit dem Arbeitskammervolumen 14 der Arbeitskammer 4. Für Schwingungen von 20 Hz bis ca. 200 Hz ist der Durchmesser des Steuerkanals 24 derart ausgebildet, dass zumindest im Wesentlichen keine Dissipation auftritt. Die Steuermembran 12 ist in Richtung ihrer Normalen verschiebbar ausgestaltet. Entsprechend ihrer Verschiebbarkeit vergrößert oder verkleinert sich das Arbeitskammervolumen 14 der Arbeitskammer 4. Diese Verschiebbarkeit der Steuermembran 12 wird vorteilhaft genutzt, um höherfrequente Schwingungen möglichst zu isolieren.

Bereits erläutert wurde, dass der Steuerkanal 24 einen ersten Abschnitt des ersten Drosselkanals 10 bildet. Wie aus der Figur 1 zu erkennen ist, schließt an den ersten Abschnitt des ersten Drosselkanals 10 und des angrenzenden Ventils 34 ein weiterer Abschnitt des Drosselkanal 10 an, der von dem Raum zwischen der Trennwand 8 und dem Ankerstößel 46 gebildet ist. Um eine gewünschte Drosselwirkung des Drosselkanals 10 zu erreichen, kann der radiale Abstand zwischen der Trennwand 8 und dem Ankerstößel 46 angepasst werden, so dass es bei einem Durchströmen von Hydraulikflüssigkeit durch den ersten Drosselkanal 10 zu der gewünschten Dissipation bzw. der korrespondierenden Dämpfung kommt. Eine weitere Möglichkeit zur Anpassung oder Erhöhung der Dissipation bietet das Ventil 34. Denn dieses kann aufgrund der Druckkammer 52 in einen beliebigen Zustand mittels des Linearaktors 16 verfahren werden, der zwischen dem Öffnungs-Zustand und dem Absperr-Zustand ist. So kann die Drosselung durch das Ventil 34 in Abhängigkeit der Frequenz der auf das Hydrolager 2 einwirkenden Schwingungen gesteuert sein.

Aus der Figur 2 ist eine Schnittdarstellung des Hydrolagers 2 entlang des Schnitts A-A aus der Figur 1 zu erkennen. Der Schnitt erfolgt dabei im Wesentlichen durch die Trennwand 8. Die Trennwand 8 ist zwischen der Arbeitskammer 4 und den Ausgleichskammer 6, 48 angeordnet. Deshalb sind aus der Figur 2 auch der erste Drosselkanal 10 bzw. der Steuerkanal 24 sowie der zweite Drosselkanal 50 zu erkennen. Die genannten Kanäle 6, 24, 50 können dazu jeweils mehrteilig ausgebildet sein, so dass jeder der Kanäle 6, 24, 50 von einer Mehrzahl von Unter-Kanälen gebildet ist. Diese können über den Umfang des Hydrolagers verteilt angeordnet sein. In den zentralen Bereich der Trennwand 8 fasst die Steuermembran 12 ein. Somit bildet sich zwischen der Steuermembran 12 und der Trennwand 8 die in Figur 1 dargestellte Druckkammer 52 aus.

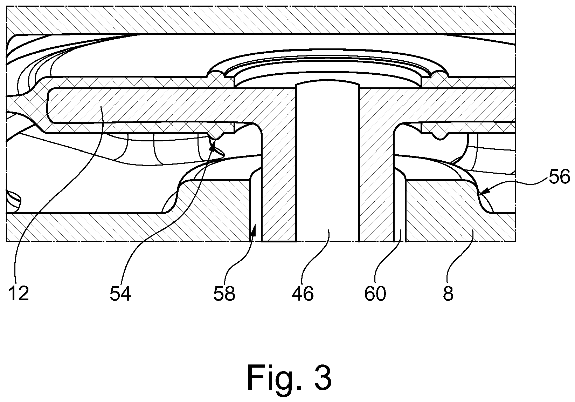

Aus der Figur 3 ist ein Ausschnitt einer schematischen, perspektivischen Schnittdarstellung der Steuermembran 12 und der angrenzenden Trennwand 8 zu erkennen. Die Steuermembran 12 weist an der der Trennwand 8 zugewandten Seite eine Dichtkontur 54 auf, die eine Dichtfläche des Ventils 34 bildet. Die Trennwand 8 weist an einer der Steuermembran 12 zugewandten Seite ebenfalls eine Dichtkontur 56 auf, die eine Gegendichtfläche des Ventils 34 bildet. Somit ist das Ventil 34 von der Steuermembran 12 und der Trennwand 8 gebildet. Wird die Steuermembran 12 gegen die Trennwand 8 mittels des Ankerstößel 46 des Aktors 16 verfahren, trifft die Dichtfläche der Dichtkontur 54 auf die Dichtfläche der Dichtkontur 56, so dass das Ventil 34 den ersten Drosselkanal 10 verschließt. Der Abschnitt des ersten Drosselkanals 10, der sich zwischen dem Ankerstößel 46 und einer radial innenseitigen Wandlung 58 einer Bohrung 60 der Trennwand 8, durch die der Ankerstößel 46 führt, bildet, wird deshalb von der Arbeitskammer 4 entkoppelt. Mögliche Druckschwankungen in der Arbeitskammer 4 führen sodann nicht zu einem Austausch von Hydraulikflüssigkeit zwischen der Arbeitskammer 4 und der ersten Ausgleichskammer 6.

### Bezugszeichenliste

- L: Längsrichtung
- 2: Hydrolager
- 4: Arbeitskammer
- 6: erste Ausgleichskammer
- 8: Trennwand
- 10: erster Drosselkanal
- 12: Steuermembran
- 14: Arbeitskammervolumen
- 16: Linearaktor
- 18: Stator
- 20: Anker
- 24: Steuerkanal
- 26: erste Rollmembran
- 28: radial innenseitige Kante
- 30: radial außenseitige Kante
- 32: zweite Rollmembran
- 34: Ventil
- 36: Tragfeder
- 38: Abdeckung
- 40: Basisgehäuse
- 42: Ventilsitz
- 44: Ventilteller
- 46: Ankerstößel
- 48: zweite Ausgleichskammer
- 50: zweiter Drosselkanal
- 52: Druckkammer
- 54: Dichtkontur
- 56: Dichtkontur
- 58: Wandung
- 60: Bohrung

## Patentansprüche

1. Hydrolager (2) mit
- einer Tragfeder (36),
- einer von der Tragfeder (36) zumindest teilweise umfassten Arbeitskammer (4), die mit einer Hydraulikflüssigkeit gefüllt ist,
- einer ersten Ausgleichskammer (6),
- einem zwischen der Arbeitskammer (4) und der ersten Ausgleichskammer (6) ausgebildeten, ersten Drosselkanal (10) zum Austausch von Hydraulikflüssigkeit,
- wobei das Hydrolager (2) ein steuerbares Ventil (34) zum Absperren oder Drosseln eines Durchflusses von Hydraulikflüssigkeit durch den ersten Drosselkanal (10) aufweist,
- eine Steuermembran (12), die zur Veränderung eines Arbeitskammervolumens (14) der Arbeitskammer (4) ausgebildet ist, und
- einen Aktor (16) zum Auslenken der Steuermembran (12),
- wobei das Ventil (34) durch den Aktor (16) steuerbar ist,
**gekennzeichnet durch**
- eine zweite Ausgleichskammer (48) und einen zwischen der Arbeitskammer (4) und der zweiten Ausgleichskammer (28) ausgebildeten, zweiten Drosselkanal (50) zum Austausch von Hydraulikflüssigkeit.

2. Hydrolager (2) nach Anspruch 1, **gekennzeichnet durch** eine Trennwand (8), die zwischen der Arbeitskammer (4) und der zweiten Ausgleichskammer (48) angeordnet ist, wobei der zweite Drosselkanal (50) von der Trennwand (8) gebildet ist.

3. Hydrolager (2) nach einem der vorhergehenden Ansprüche, **dadurch gekennzeichnet, dass** das Hydrolager (2) einen Steuerkanal (24) aufweist, der von der Arbeitskammer (4) zu der Steuermembran (12) führt.

4. Hydrolager (2) nach einem der vorhergehenden Ansprüche, **dadurch gekennzeichnet, dass** der Steuerkanal (24) einen Abschnitt des ersten Drosselkanals (10) bildet.

5. Hydrolager (2) nach einem der vorhergehenden Ansprüche, **dadurch gekennzeichnet, dass** das Ventil (34) durch die Steuermembran (12) und die Trennwand (8) gebildet ist.

6. Hydrolager (2) nach einem der vorhergehenden Ansprüche, **dadurch gekennzeichnet, dass** die Trennwand (8) eine Dichtfläche des Ventils (34) und die Steuermembran (12) einen Gegendichtfläche des Ventils (34) bilden, wobei ein Raum zwischen der Dichtfläche und der Gegendichtfläche einen Abschnitt des ersten Drosselkanals (10) bildet.

7. Hydrolager (2) nach dem vorhergehenden Anspruch, **dadurch gekennzeichnet, dass** die Trennwand (8) an einer der Steuermembran (12) zugewandten Seite eine Dichtkontur (56) aufweist, die die Dichtfläche bildet, und die Steuermembran (12) an einer der Trennwand (8) zugewandten Seite eine weitere Dichtkontur (54) aufweist, die die Gegendichtfläche bildet.

8. Hydrolager (2) nach einem der vorhergehenden Ansprüche, **dadurch gekennzeichnet, dass**
- der Aktor (16) einen Stator (18) und einen in Längsrichtung des Stators (18) beweglichen Anker (20) umfasst,
- dem Anker (20) ein Ankerstößel (46) zugeordnet ist,
- der Anker (20) mittels des Ankerstößels (46) mit der Steuermembran (12) mechanisch verbunden ist,
- das Hydrolager (2) eine erste Rollmembran (26) umfasst,
- die erste Rollmembran (26) an dem Ankerstößel (46) und an der Trennwand (8) befestigt ist, und
- die erste Ausgleichskammer (6) zwischen der Trennwand (8), dem Ankerstößel (46) und der ersten Rollmembran (26) ausgebildet ist.

9. Hydrolager (2) nach dem vorhergehenden Anspruch, **dadurch gekennzeichnet, dass** die Trennwand (8) eine Bohrung (60) aufweist, durch die der Ankerstößel (46) führt, wobei ein Raum zwischen dem Ankerstößel (46) und einer radial innenseitigen Wandung (58) der Bohrung (60) einen Abschnitt des ersten Drosselkanals (10) bildet.

10. Hydrolager (2) nach einem der vorhergehenden Ansprüche 8 bis 9, **dadurch gekennzeichnet, dass** das Hydrolager (2) eine zweite, an der Trennwand (8) befestigte Rollmembran (32) umfasst, wobei die zweite Ausgleichskammer (48) zwischen der Trennwand (8) und der zweiten Rollmembran (32) ausgebildet ist.

11. Hydrolager (2) nach dem vorhergehenden Anspruch, **dadurch gekennzeichnet, dass** die erste und die zweite Rollmembran (26, 32) getrennt oder als integrales Bauteil ausgestaltet sind.

12. Hydrolager (2) nach einem der vorhergehenden Ansprüche 3 bis 11, **dadurch gekennzeichnet, dass** eine Druckkammer (52) vorgesehen ist, wobei die Steuermembran (12) zwischen dem Steuerkanal (24) und der Druckkammer (52) angeordnet ist.

13. Kraftfahrzeug mit
- einem Fahrzeugrahmen,
- einem Motor und
- einem Motorlager, das eine lagernde Verbindung zwischen dem Motor und dem Fahrzeugrahmen herstellt,
**dadurch gekennzeichnet, dass**
- das Motorlager durch ein Hydrolager (2) nach einem der vorhergehenden Ansprüche 1 bis 12 ausgebildet ist.

## Claims

1. Hydraulic mount (2), having
- a load-bearing spring (36),
- a working chamber (4) which is at least partially surrounded by the load-bearing spring (36) and which is filled with a hydraulic fluid,
- a first equalization chamber (6), and
- a first throttle duct (10) which is formed between the working chamber (4) and the first equalization chamber (6) and which serves for the exchange of hydraulic fluid,
- wherein the hydraulic mount (2) has a controllable valve (34) for shutting off or throttling a throughflow of hydraulic fluid through the first throttle duct (10),
- a control diaphragm (12) which is designed for the variation of a working chamber volume (14) of the working chamber (4), and
- an actuator (16) for the deflection of the control diaphragm (12),
- wherein the valve (34) is controllable by way of the actuator (16),
**characterized by**
- a second equalization chamber (48) and a second throttle duct (50) which is formed between the working chamber (4) and the second equalization chamber (28) and which serves for the exchange of hydraulic fluid.

2. Hydraulic mount (2) according to Claim 1, **characterized by** a partition (8) which is arranged between the working chamber (4) and the second equalization chamber (48), wherein the second throttle duct (50) is formed by the partition (8).

3. Hydraulic mount (2) according to any of the preceding claims, **characterized in that** the hydraulic mount (2) has a control duct (24) which leads from the working chamber (4) to the control diaphragm (12).

4. Hydraulic mount (2) according to any of the preceding claims, **characterized in that** the control duct (24) forms a section of the first throttle duct (10) .

5. Hydraulic mount (2) according to any of the preceding claims, **characterized in that** the valve (34) is formed by the control diaphragm (12) and the partition (8).

6. Hydraulic mount (2) according to any of the preceding claims, **characterized in that** the partition (8) forms a sealing surface of the valve (34) and the control diaphragm (12) forms a counterpart sealing surface of the valve (34), wherein a space between the sealing surface and the counterpart sealing surface forms a section of the first throttle duct (10).

7. Hydraulic mount (2) according to the preceding claim, **characterized in that** the partition (8) has, on a side facing toward the control diaphragm (12), a sealing contour (56) which forms the sealing surface, and the control diaphragm (12) has, on a side facing toward the partition (8), a further sealing contour (54) which forms the counterpart sealing surface.

8. Hydraulic mount (2) according to any of the preceding claims, **characterized in that**
- the actuator (16) comprises a stator (18) and an armature (20) which is movable in a longitudinal direction of the stator (18),
- the armature (20) is assigned an armature plunger (46),
- the armature (20) is mechanically connected by way of the armature plunger (46) to the control diaphragm (12),
- the hydraulic mount (2) comprises a first rolling diaphragm (26),
- the first rolling diaphragm (26) is fastened to the armature plunger (46) and to the partition (8), and
- the first equalization chamber (6) is formed between the partition (8), the armature plunger (46) and the first rolling diaphragm (26).

9. Hydraulic mount (2) according to the preceding claim, **characterized in that** the partition (8) has a bore (60) through which the armature plunger (46) extends, wherein a space between the armature plunger (46) and a radially inside wall (58) of the bore (60) forms a section of the first throttle duct (10) .

10. Hydraulic mount (2) according to either of the preceding Claims 8 and 9, **characterized in that** the hydraulic mount (2) comprises a second rolling diaphragm (32) fastened to the partition (8), wherein the second equalization chamber (48) is formed between the partition (8) and the second rolling diaphragm (32).

11. Hydraulic mount (2) according to the preceding claim, **characterized in that** the first and the second rolling diaphragm (26, 32) are configured separately or as an integral component.

12. Hydraulic mount (2) according to any of the preceding Claims 3 to 11, **characterized in that** a pressure chamber (52) is provided, wherein the control diaphragm (12) is arranged between the control duct (24) and the pressure chamber (52).

13. Motor vehicle having
- a vehicle frame,
- an engine and
- an engine mount which produces a connection, with mounting action, between the engine and the vehicle frame,
**characterized in that**
- the engine mount is formed by a hydraulic mount (2) according to any of the preceding Claims 1 to 12.

## Revendications

1. Palier hydraulique (2), comprenant
- un ressort de suspension (36),
- une chambre de travail (4) entourée au moins en partie par le ressort de suspension (36) et qui est remplie d'un liquide hydraulique,
- une première chambre de compensation (6),
- un premier conduit d'étranglement (10) réalisé entre la chambre de travail (4) et la première chambre de compensation (6) et destiné à l'échange de liquide hydraulique,
- le palier hydraulique (2) présentant une soupape pouvant être commandée (34) pour bloquer ou étrangler un débit de liquide hydraulique à travers le premier conduit d'étranglement (10),
- une membrane de commande (12) qui est réalisée pour modifier un volume de chambre de travail (14) de la chambre de travail (4), et
- un actionneur (16) pour dévier la membrane de commande (12),
- la soupape (34) pouvant être commandée par l'actionneur (16),
**caractérisé par**
- une deuxième chambre de compensation (48) et un deuxième conduit d'étranglement (50) réalisé entre la chambre de travail (4) et la deuxième chambre de compensation (28) et destiné à un échange de liquide hydraulique.

2. Palier hydraulique (2) selon la revendication 1, **caractérisé par** une paroi de séparation (8) qui est disposée entre la chambre de travail (4) et la deuxième chambre de compensation (48), le deuxième conduit d'étranglement (50) étant formé par la paroi de séparation (8).

3. Palier hydraulique (2) selon l'une quelconque des revendications précédentes, **caractérisé en ce que** le palier hydraulique (2) présente un conduit de commande (24) allant de la chambre de travail (4) à la membrane de commande (12).

4. Palier hydraulique (2) selon l'une quelconque des revendications précédentes, **caractérisé en ce que** le conduit de commande (24) constitue une partie du premier conduit d'étranglement (10).

5. Palier hydraulique (2) selon l'une quelconque des revendications précédentes, **caractérisé en ce que** la soupape (34) est formée par la membrane de commande (12) et la paroi de séparation (8).

6. Palier hydraulique (2) selon l'une quelconque des revendications précédentes, **caractérisé en ce que** la paroi de séparation (8) constitue une surface d'étanchéité de la soupape (34) et la membrane de commande (12) constitue une contre-surface d'étanchéité de la soupape (34), un espace entre la surface d'étanchéité et la contre-surface d'étanchéité constituant une partie du premier conduit d'étranglement (10).

7. Palier hydraulique (2) selon la revendication précédente, **caractérisé en ce que** la paroi de séparation (8) présente sur un côté tourné vers la membrane de commande (12) un contour d'étanchéité (56) qui constitue la surface d'étanchéité, et la membrane de commande (12) présente sur un côté tourné vers la paroi de séparation (8) un contour d'étanchéité supplémentaire (54) qui constitue la contre-surface d'étanchéité.

8. Palier hydraulique (2) selon l'une quelconque des revendications précédentes, **caractérisé en ce que**
- l'actionneur (16) comprend un stator (18) et un induit (20) mobile dans la direction longitudinale du stator (18),
- un poussoir d'induit (46) est associé à l'induit (20),
- l'induit (20) est relié mécaniquement à la membrane de commande (12) au moyen du poussoir d'induit (46) ,
- le palier hydraulique (2) comprend une première membrane déroulante (26),
- la première membrane déroulante (26) est fixée au poussoir d'induit (46) et à la paroi de séparation (8), et
- la première chambre de compensation (6) est réalisée entre la paroi de séparation (8), le poussoir d'induit (46) et la première membrane déroulante (26).

9. Palier hydraulique (2) selon la revendication précédente, **caractérisé en ce que** la paroi de séparation (8) présente un alésage (60) par lequel passe le poussoir d'induit (46), un espace entre le poussoir d'induit (46) et une paroi (58) radialement côté intérieur de l'alésage (60) constituant une partie du premier conduit d'étranglement (10).

10. Palier hydraulique (2) selon l'une quelconque des revendications précédentes 8 à 9, **caractérisé en ce que** le palier hydraulique (2) comprend une deuxième membrane déroulante (32) fixée à la paroi de séparation (8), la deuxième chambre de compensation (48) étant réalisée entre la paroi de séparation (8) et la deuxième membrane déroulante (32).

11. Palier hydraulique (2) selon la revendication précédente, **caractérisé en ce que** la première et la deuxième membrane déroulante (26, 32) sont configurées séparément ou sous la forme d'un composant d'un seul tenant.

12. Palier hydraulique (2) selon l'une quelconque des revendications précédentes 3 à 11, **caractérisé en ce qu'**une chambre de pression (52) est prévue, la membrane de commande (12) étant disposée entre le conduit de commande (24) et la chambre de pression (52).

13. Véhicule automobile, comprenant
- un châssis,
- un moteur, et
- un palier de moteur qui établit une liaison de palier entre le moteur et le châssis,
**caractérisé en ce que**
- le palier de moteur est réalisé par un palier hydraulique (2) selon l'une quelconque des revendications précédentes 1 à 12.
